# EUROPEAN PATENT APPLICATION

(11) **EP 3 351 306 A1**
(43) Date of publication of application: **25.07.2018**
(21) Application number: 18020005.7
(22) Date of filing: 04.01.2018
(51) Int. Cl.: B03C 3/78, B01D 46/00, B01D 41/04

(54) **AUTOMATIC WASHING SYSTEM FOR WASHABLE FILTERS IN VENTILATION EQUIPMENT**

(30) Priority: 18.01.2017 TR 201700731
(71) Applicant: Sümnül, Ahmet Tayfun, Ankara (TR)
(72) Inventor: Sümnül, Ahmet Tayfun, Ankara (TR)

(57) **Abstract**

It is an automatic washing system that enables the electrostatic or other washable filters to be cleaned inside its own cabinet without removing outside. It consists of water inlet selenoid valve (1), closed pressure tank (2), exit selenoid valve (3), spraying pipe punched along (4), pressure sensor (5), dosage pump (6) and pressurization pump (7).

Water comes from city water network is (stored and pressurized) accumulated in closed pressure tank (2) its pressure increases by its own city water network pressure, high pressure water accumulated in closed pressure tank (2) is released to spraying pipe punched along (4) through selenoid valves (1) (3) in some periods as pressure reaches to some certain values. Spraying pipe punched along (4) has holes and slots opened on it instead of nozzles. If city water network pressure is not enough a small pressurization pump (7) is added to increase accumulated water pressure.

## Description

### Field of the Invention:

The invention is intended automatically wash electrostatic or other washable metal / fiber filters used in ventilation and exhaust systems, in the cabinet without removing them from the filter cabinet.

### Background of invention:

Electrostatic filters, fiber filters and metal filters are used on fresh air or exhaust air sides of comfort and industrial ventilation systems. Some filters are replaced with new ones when they are filled / contaminated, and some can be reused after being washed and cleaned.

Washing applications can be done by various methods after filters are taken out side of device cabinet, or there are automatic washing systems installed in the device cabinet.

The existing automatic washing systems consist of a group of nozzles spraying water and other cleaning chemicals to cover and wash down the filter surface. Nozzles are fed with water directly from the city water network or the pump groups are formed for pressurization.

### Objects of the Invention:

Since the nozzles are installed at some spacing, they are not able to spray water and cleaning chemicals perpendicularly to filter surface at every point. In cleaning metal and fiber panel filters, this application with nozzles is sufficient, but it is insufficient to spray water or cleaning chemicals between the collecting lamellas of the electrostatic filters. Mounting nozzles creates labor cost, and nozzles themselves are also expensive.

The existing city water network pressure and flow in the buildings do not always meet the demand and therefore additional pump groups are installed. Pump groups also need some area for their installation as well as they are bringing cost additions.

### Description of Drawing

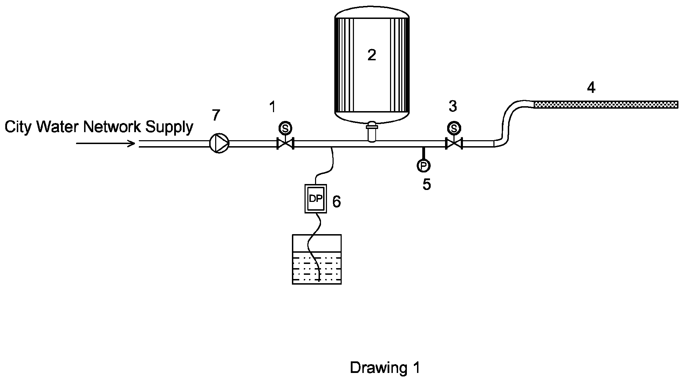

Drawing 1: A simplified drawing of the system

### References in the Drawing

- 1:: Inlet selenoid valve
- 2:: Closed pressure tank
- 3:: Exit selenoid valve
- 4:: Spray pipe punched along
- 5:: Pressure sensor
- 6:: Dosage pump
- 7:: Pressurization pump

### Description of Invention:

The invention sprays water and cleaning chemicals through the holes drilled on a pipe, instead of nozzles. Depending on the distance between spray pipe and the filter and the width of the filter lots of holes are drilled on spray pipe homogeneously so that water is sprayed to filter vertically in one axis. In this case, water and cleaning chemicals are sprayed deep in filter structures like electrostatic filters consisting of lamellas.

Holes punched along the spray pipe (4) reduce the labor cost and allows installation in much narrower spaces in the cabin.

To punch the holes, first wall thickness of the pipe is reduced. So that punching becomes easier. Holes can be punched by using drilling and cutting hand tools. Since handmade holes will be more random and homogenous, spray pattern will be more random and homogenous than spray pattern of holes punched by machines

While system is not in operation both selenoid valves(1),(3) are in closed position. At scheduled time when system starts operation, inlet selenoid valve (1) opens. Water coming from city water network is accumulated in closed pressure tank (2) and pressure increases at the same time. When pressure rises to preset required value, pressure sensor (5) gives signal to open exit selenoid valve (3). Water accumulated in closed pressure tank (2) is pushed to spray pipe punched along (4) and sprayed to filter. Then pressure drops and exit selenoid valve (3) is closed and water from city water network is accumulated in closed pressure tank (2) once more. Until filter becomes clean enough this cycle repeats. If there is more than one filter group, number of exit selenoid valves (3) is increased equally and each filter group is washed one by one. According to required water flow rate and water pressure, size and preset pressure value of closed pressure tank (2) is adjusted.

In case city water network pressure is low, then a small pressurization pump (7) is used to increase pressure of water accumulated in closed pressure tank (2). When exit selenoid valve (3) is open, accumulated water in closed pressure tank (2) is sprayed. By means of closed pressure tank (2) pressurization pump becomes smaller. When inlet selenoid valve (1) is closed, pressurization pump (7) is also closed. Up to some pressure values a bypass line over pressurization pump (7) can be added to speed up accumulation time of water in closed pressure tank (2).

### Industrial Applicability:

Invention can be used to wash, automatically and in its own cabinet, filters like electrostatic filters on kitchen hoods exhaust lines, washable filters in all kinds of ventilation and exhaust lines like textile, paper, etc. industries.

## Claims

1. An automatic washing system for washable filters in ventilation equipment and comprising: Inlet selenoid valve (1), closed pressure tank (2), exit selenoid valve (3), spray pipe punched along (4), pressure sensor (5), dosage pump (6) and pressurization pump (7).

2. The automatic washing system for washable filters in ventilation equipment of claim 1 wherein; while exit selenoid valve (3) is closed, water from the city network is accumulated by its own pressure in the closed pressure tank (2) and when pressure in closed pressure tank (2) reaches at a preset pressure value exit selenoid valves (3) opens.

3. The automatic washing system for washable filters in ventilation equipment of claim 1 wherein; if city water network pressure is not high enough, a pressurization pump (7) rises the pressure of accumulated water in closed pressure tank (2).

4. The automatic washing system for washable filters in ventilation equipment of claim 1 wherein; spray pipe punched along (4) wall thickness is decreased at some points and lots of holes and slots opened along on the pipe.
